# EUROPÄISCHE PATENTSCHRIFT

(11) **EP 3 799 264 B1**
(45) Veröffentlichungstag und Bekanntmachung des Hinweises auf die Patenterteilung: **19.04.2023**
(21) Anmeldenummer: 19200500.7
(22) Anmeldetag: 30.09.2019
(51) Int. Cl.: H02K 1/32, H02K 9/22, H02K 7/00

(54) **ANTRIEBSWELLE EINER DYNAMOELEKTRISCHEN MASCHINE**
DRIVE SHAFT OF DYNAMO-ELECTRIC MACHINE
ARBRE D'ENTRAÎNEMENT D'UNE MACHINE DYNAMOÉLECTRIQUE

(43) Veröffentlichungstag der Anmeldung: 31.03.2021
(73) Patentinhaber: Siemens Aktiengesellschaft, 80333 München (DE)
(72) Erfinder: Hösle, Markus, 91058 Erlangen (DE)
(74) Vertreter: Siemens Patent Attorneys

(56) Entgegenhaltungen:
- WO-A1-2017/104560
- WO-A1-2018/059844
- CN-A- 110 098 691
- DE-A1-102006 045 178
- DE-A1-102016 124 632
- FR-A1- 3 065 124
- GB-A- 2 558 368
- JP-A- S5 577 350
- JP-A- H06 141 509
- JP-A- H06 178 501
- JP-A- 2002 017 066
- JP-A- 2014 135 859

## Beschreibung

Die Erfindung betrifft eine Antriebswelle einer dynamoelektrischen Maschine.

Darüber hinaus betrifft die Erfindung eine dynamoelektrische Maschine mit mindestens einer solchen Antriebswelle. Außerdem betrifft die Erfindung eine Arbeitsmaschine mit mindestens einer dynamoelektrischen Maschine der vorgenannten Art.

Antriebswellen von Arbeitsmaschinen, wie Lüfter, Kompressoren, Kränen, Spindeln werden meist von dynamoelektrischen Maschinen angetrieben (siehe z.B. WO 2018/059844 A1, JP H06 141509 A, GB 2 558 368 A, WO 2017/104560 A1, DE 10 2016 124 632 A1, FR 3 065 124 A1, und DE 10 2006 045 178 A1). Diese Wellen sind oft mit einem Rotor der dynamoelektrischen Maschine drehfest verbunden und in einem oder mehreren Lagern gelagert. Aufgrund der dabei erforderlichen mechanischen Festigkeit sind diese Wellen aus Materialien geschmiedet, gedreht oder gegossen. Diese Materialien transportieren auch Wärme vergleichsweise gut. Dabei wird jedoch Wärme aus unterschiedlichen Wärmequellen an die Antriebswellen gekoppelt. Beispielsweise kann somit ein Lagerinnenring mit dem Blechpaket des Rotors wärmetechnisch in Verbindung stehen. Ebenso wie Komponenten der Arbeitsmaschine mit Bestandteilen der dynamoelektrischen Maschine, wie z.B. Lagern oder dem Rotor wärmetechnisch in Verbindung stehen können. Dies bedeutet beispielsweise, dass die Wärme von einer Wärmequelle mit einer höheren Temperatur zu einer Wärmequelle mit einer niederen Temperatur "fließt". Das kann beispielsweise zur Aufheizung der Lager und damit gegebenenfalls zur Beeinträchtigung der Schmiereigenschaften führen.

Darüber hinaus können bei einer derartigen Antriebsanordnung auch Lagerströme auftreten, die die Laufbahnen der Lager, insbesondere Wälzlager schädigen können.

Ein möglicher Ansatz, dem vorgenannten Problem zu begegnen und beispielsweise Beeinträchtigung der Schmiereigenschaften zu vermeiden, besteht darin, temperaturbeständigeres Schmiermittel in den Lagern einzusetzen. Dies kann aber aus Wartungs-, Wärmeableitungseffizienz- und Kostengründen unerwünscht sein.

Die Aufgabe der vorliegenden Erfindung besteht darin, eine Antriebswelle zu schaffen, die bei verbesserten Wärmeübertragungseigenschaften einfacher zu warten und günstiger herzustellen ist.

Die Aufgabe wird mit einer Antriebswelle nach Anspruch 1 gelöst.

Mit einem derartigen Wellenaufbau können auch Lagerströme vermieden werden.

Der Erfindung liegt somit die Erkenntnis zugrunde, dass Wärme von Wärmequellen von unterschiedlichem Temperaturniveau entlang unterschiedlicher Wärmeleitungs-Pfade isoliert voneinander zu einer Wärmesenke geführt werden können.

Im Zusammenhang mit der vorliegenden Erfindung wird unter dem Begriff "Wärmequelle" auch mehrere Wärmequellen von ähnlichem Temperaturniveau verstanden. Die Wärme von solchen Wärmequellen kann über den gleichen Wärmeleitungs-Pfad zur Wärmesenke geführt werden.

Bei einer bevorzugten Ausführungsform kann mit Vorteil vorgesehen sein, dass ein erstes Ende eines jeden Wärmeleitungs-Pfads an eine Wärmequelle und ein zweites Ende dieses Wärmeleitungs-Pfads an eine Wärmesenke thermisch ankoppelbar ist, wobei die unterschiedlichen Wärmequellen an die unterschiedlichen Wärmeleitungs-Pfade thermisch ankoppelbar sind und die Wärmequellen höhere Temperatur als die Wärmesenke aufweisen.

Von dem Begriff Wärmequelle können auch mehrere unterschiedliche Wärmequellen umfasst sein, wenn diese Wärmequellen in etwa gleiches Temperaturniveau aufweisen.

Außerdem kann mit Vorteil vorgesehen sein, dass die unterschiedlichen, voneinander thermisch getrennten Wärmeleitungs-Pfade aus unterschiedlichem Material ausgebildet sind. Als Materialien werden dabei je nach thermischer und mechanischer Anforderung an die Antriebswelle unterschiedlichste Stähle, Metalle, Legierungen und Kunststoffe eingesetzt.

Es kann darüber hinaus vorgesehen sein, dass die Wärmeleitungs-Pfade durch entsprechende Schicht oder Schichten voneinander thermisch getrennt sein können, wobei jede Schicht ein Material umfasst, vorzugsweise aus diesem Material besteht, dessen Wärmeleitfähigkeit schlechter als die Wärmeleitfähigkeit der Wärmeleitungs-Pfade ist.

Außerdem kann bei jenen Wärmeleitungs-Pfaden, die an eine äußere Mantelfläche der Antriebswelle zumindest teilweise angrenzen, zweckmäßig sein, diese Wärmeleitungs-Pfade von der äußeren Mantelfläche der Antriebswelle thermisch zu trennen, z.B. durch Versehen mindestens einer weiteren thermoisolierenden Schicht. Dabei kann diese mindestens eine Schicht ein Material umfassen, vorzugsweise aus diesem Material bestehen, dessen Wärmeleitfähigkeit schlechter als die Wärmeleitfähigkeit des die Antriebswelle umgebenden Mediums, z.B. der Luft ist.

Es kann zweckdienlich sein, wenn jeder Wärmeleitungs-Pfad eine monolithische Struktur bildet.

Weitere Vorteile ergeben sich, wenn die unterschiedlichen Wärmeleitungs-Pfade elektrisch voneinander getrennt sind.

Bei einer besonders bevorzugten Ausführungsform kann mit Vorteil vorgesehen sein, dass die Wärmeleitungs-Pfade koaxial angeordnet sind.

Des Weiteren kann mit Vorteil vorgesehen sein, dass jeder Wärmeleitungs-Pfad im Querschnitt in etwa die Form eines Kreissegments aufweist.

Ferner kann mit Vorteil vorgesehen sein, dass die Antriebswelle eine Aufnahme aufweist, die zum Aufnehmen mindestens einer Wärmesenke eingerichtet ist und vorzugsweise mit der Antriebswelle koaxial angeordnet ist.

Um keinem Wärmefluss von der Arbeitsmaschine ausgesetzt zu sein, kann es zweckmäßig sein, wenn die Antriebswelle eine thermische Blockade aufweist, die einen Wärmefluss in Axialrichtung zwischen einem ersten Teil, beispielsweise einem ersten Axialabschnitt der Antriebswelle und einem zweiten Teil, beispielsweise einem zweiten Axialabschnitt der Antriebswelle verhindert.

Die Aufgabe wird auch mit einer dynamoelektrischen Maschine mit mindestens einer oben beschriebenen Antriebswelle gelöst.

Bei einer bevorzugten Ausführungsform kann die Maschine mindestens zwei Wärmequellen mit jeweils unterschiedlicher Temperatur und mindestens eine Wärmesenke umfassen, wobei die unterschiedlichen Wärmequellen an die unterschiedlichen, voneinander thermisch getrennten Wärmeleitungs-Pfade derart thermisch gekoppelt sind, dass die Wärme von den unterschiedlichen Wärmequellen entlang der unterschiedlichen Wärmeleitungs-Pfade isoliert zu der mindestens einen Wärmesenke fließen kann.

Vorzugsweise ist jede Wärmequelle an jeweils einen Wärmeleitungs-Pfad thermisch gekoppelt und umgekehrt, so dass zwischen den Wärmequellen und Wärmeleitungs-Pfaden eine Eins-zueins-Korrespondenz besteht.

Es kann darüber hinaus vorgesehen sein, dass mindestens eine der Wärmequellen als ein, vorzugsweise an der Antriebswelle drehfest fixierter Rotorabschnitt oder als ein Lager, in dem die Antriebswelle vorzugsweise gelagert ist und insbesondere mit diesem mechanisch verbunden ist, ausgebildet ist.

Außerdem kann vorgesehen sein, dass die Wärmesenke als ein Lüfter oder ein Wärmetauscher ausgebildet ist.

Es kann zweckdienlich sein, wenn an der Wärmesenke keine weiteren Wärmekopplungen vorgesehen sind.

Darüber hinaus kann es zweckdienlich sein, wenn der Lüfter an die Antriebswelle wärmetechnisch gekoppelt ist.

Weitere Vorteile ergeben sich, wenn die Wärmesenke ein Kühlmedium, z.B. Luft umfasst, um an dieses Kühlmedium die Wärme abzugeben. Eine thermische Kopplung kann sich erst sodann über das Kühlmedium einstellen.

Es kann zweckdienlich sein, wenn die Maschine ferner eine Wärme-Trennvorrichtung umfasst, wobei die Wärme-Trennvorrichtung derart ausgebildet und an der Antriebswelle derart angeordnet ist, dass die Wärme nach dem Auskoppeln aus den unterschiedlichen Wärmeleitungs-Pfaden weiter entlang voneinander thermisch isolierter Pfade von der Maschine abfließen kann.

Es kann vorgesehen sein, dass die Wärmesenke die vorgenannte Wärme-Trennvorrichtung umfasst. Auf diese Weise kann sich die Trennung der Wärme in der Wärmesenke, z.B. in dem Lüfter oder in dem Wärmetauscher fortsetzen.

Außerdem wird ein Verfahren zur Herstellung der oben beschriebenen Antriebswelle für die oben beschriebene dynamoelektrische Maschine offenbart, wobei das Verfahren folgende Schritte umfasst:
- Rechnergestütztes Konstruieren eines dreidimensionalen Modells der vorgenannten Antriebswelle aufgrund einer Verteilung von Wärmequellen und vorzugsweise -senke(n) in der dynamoelektrischen Maschine entlang der Antriebswelle;
- Herstellen der Antriebswelle gemäß dem konstruierten dreidimensionalen Modell mittels eines Additive-Manufacturing- bzw. eines 3D-Druck-Verfahrens.

Dabei kann es vorgesehen sein, dass die Herstellung der Antriebswelle durch das Additive-Manufacturing- bzw. eines 3D-Druck-Verfahren entweder entlang oder quer zur Axialrichtung der Antriebswelle erfolgt. Dies bedeutet, dass das Auftragen von Schichten entweder entlang oder quer zur Axialrichtung der Antriebswelle erfolgen kann.

Es sei an dieser Stelle angemerkt, dass das Ausbilden der Wärmeleitungs-Pfade, ihrer wärmetechnischen Trennung, wie z.B. das Ausbilden von den entsprechenden Schichten, oder der Blockade mittels des Additive-Manufacturing- bzw. des 3D-Druck-Verfahrens erfolgen kann.

Somit liegt der Erfindung auch jene Erkenntnis zugrunde, dass eine Antriebswelle mittels eines Additive-Manufacturing- bzw. eines 3D-Druck-Verfahrens derart aus unterschiedlichen Schichten/Materialen gestaltet wird, dass nahezu jede Wärmequelle innerhalb der Antriebswelle ihren eigenen "thermischen Pfad" - Wärmeleitungs-Pfad - zur Wärmesenke hat. Dabei ist der Ausgangspunkt der Herstellung einer derartigen Welle die Kenntnis der Verteilung der Wärmequellen entlang der Antriebswelle. In anderen Worten ist jeder Wärmequelle ihr eigener Andockpunkt an der Welle zugeordnet, wobei die Gesamtheit der Andockpunkte axial und/oder radial und/oder in Umfangsrichtung verteilt sind.

Summa summarum lässt sich mittels eines Additive-Manufacturing- bzw. eines 3D-Druck-Verfahrens eine Antriebswelle herstellen, die nicht nur der Drehmomentenübertragung auf eine Arbeitsmaschine dient, sondern auch ein ausgewogenes und effizientes Wärmemanagement z.B. einer dynamoelektrischen Maschine und deren Arbeitsmaschine gewährleistet, indem Wärmequellen, die thermisch mit der Welle gekoppelt sind, unabhängig voneinander kühlbar sind.

Die Erfindung samt weiteren Vorteilen ist im Folgenden an Hand beispielhafter Ausführungsformen näher erläutert, die in der Zeichnung veranschaulicht sind. In dieser zeigt
- FIG 1: eine dynamoelektrische Maschine mit einer Antriebswelle;
- FIG 2: einen Querschnitt der Antriebswelle der FIG 1;
- FIG 3: einen Querschnitt einer Antriebswelle gemäß einer weiteren bevorzugten Ausführungsform;
- FIG 4: eine Antriebswelle mit einer Blockade;
- FIG 5: eine Antriebsmaschine bzw. -system mit einer dynamoelektrischen Maschine, und
- FIG 6: eine Antriebsmaschine bzw. -system mit einer Antriebswelle.

Im Folgenden bezeichnen - sofern nicht anders angegeben - gleiche Bezugszeichen gleiche Merkmale.

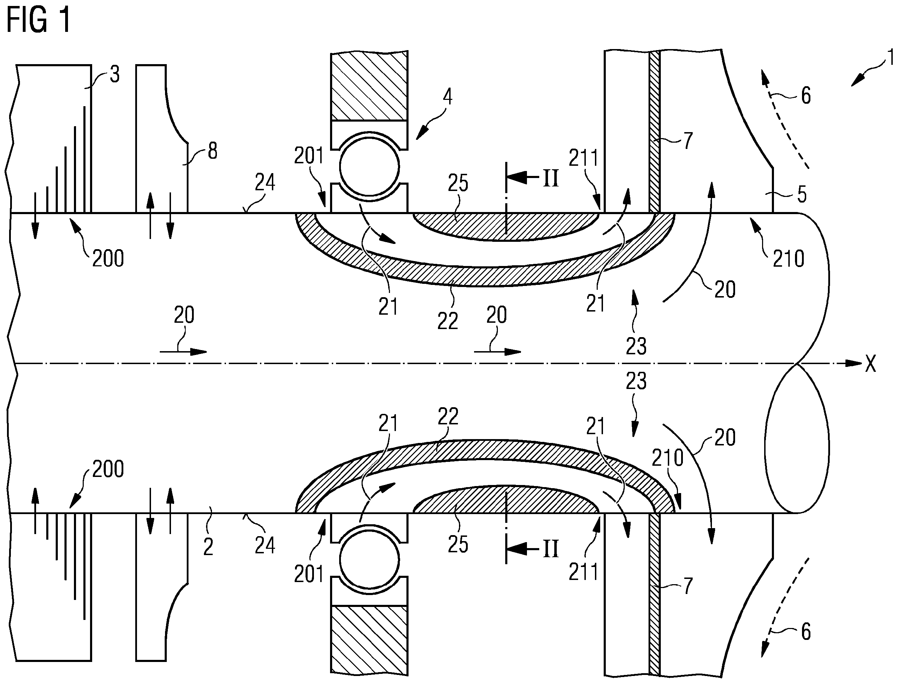

Zunächst wird auf die FIG 1 Bezug genommen. FIG 1 zeigt in einer Detaildarstellung eine dynamoelektrische Maschine 1 mit einer Antriebswelle 2, die der erfindungsgemäßen Antriebswelle entspricht. Auf der Antriebswelle 2 ist ein Rotorabschnitt 3 drehfest fixiert. Ferner ist in der FIG 1 ein Lager 4 der Antriebswelle 2 zu sehen. Die Antriebswelle 2 kann in dem Lager 4 gelagert und mit dieser mechanisch verbunden sein.

Der Rotor und das Lager sind Beispiele von Wärmequellen, deren Wärme an die Antriebswelle 2 gekoppelt wird. Um diese Wärme effizienter abzuleiten, weist die Antriebswelle 2 zwei unterschiedliche, voneinander thermisch getrennte Wärmeleitungs-Pfade 20, 21 auf, die sich beispielsweise entlang einer Axialrichtung X der Antriebswelle 2 erstrecken. Eine Richtung, in die die Wärme in dem gezeigten Beispiel abgeleitet wird, ist mit Pfeilen verdeutlicht (Wärmestromrichtung). Diese Richtung kann der Axialrichtung X der Antriebswelle 2 parallel sein. Die Wärmeleitungs-Pfade 20, 21 können aus demselben oder aus verschiedenen Materialien ausgebildet sein. Die Wärmeleitungs-Pfade 20, 21 können beispielsweise durch eine Schicht 22 eines Materials thermisch getrennt sein, dessen Wärmeleitfähigkeit schlechter als die Wärmeleitfähigkeit beider Wärmeleitungs-Pfade 20, 21 ist. Vorzugsweise ist jeder Wärmeleitungs-Pfad 20, 21 monolithisch.

Jeder Pfad 20 bzw. 21 weist zwei Enden 200, 210 bzw. 201, 211 auf. Es ist zweckdienlich, wenn die Enden des jeweiligen Wärmeleitungs-Pfades räumlich voneinander getrennt sind (siehe FIG 1). Die Wärme kann in ein Ende 200, 201 des entsprechenden Wärmeleitungs-Pfads 20, 21 ein- und aus dem anderen Ende 210, 211 auskoppeln. Figur lässt erkennen, dass der Rotorabschnitt 3 an ein erstes Ende 200 eines ersten Wärmeleitungs-Pfads 20 thermisch ankoppelt und das Lager 4 an ein erstes Ende 201 eines zweiten Wärmeleitungs-Pfads 21 thermisch ankoppelt. Die Wärme aus unterschiedlichen Wärmequellen 3, 4 fließt (siehe Pfeilrichtungen) dank thermischer Trennung entlang der unterschiedlichen Pfade 20, 21 und koppelt aus jeweils einem zweiten Ende 210, 211 des entsprechenden Wärmeleitungs-Pfads 20, 21 aus der Antriebswelle 2 aus.

Die zweiten Enden der unterschiedlichen Wärmeleitungs-Pfade stehen sind mit einer Wärmesenke wärmetechnisch gekoppelt.

Als Wärmesenke kann beispielsweise ein mit der Antriebswelle 2 thermisch in Kontakt stehender Lüfter 5 oder ein Wärmetauscher (nicht gezeigt) oder ein Kühlmedium, z.B. Luft, fungieren. Eine beispielhafte Stromrichtung 6 von Kühlluft ist ebenfalls FIG 1 zu entnehmen. Der Lüfter 5 zieht die Wärme der Antriebswelle 2 ab und gibt sie an das Kühlmedium ab.

Bei der Maschine 1 kann außerdem eine Wärme-Trennvorrichtung 7 vorgesehen sein. Diese Trennvorrichtung ist derart ausgebildet und steht mit der Antriebswelle 2 derart in Kontakt, dass die Wärme die aus dem zweiten Ende eines Wärmeleitungs-Pfads (z.B. des Wärmeleitungs-Pfads 21) nicht in das zweite Ende des anderen Wärmeleitungs-Pfads (z.B. des Wärmeleitungs-Pfads 20) wieder einkoppeln kann. Dadurch kann eine thermische Trennung außerhalb der Antriebswelle 2 ermöglicht werden, um auch dort die thermische Kopplung gering zu halten und damit einen Wärmefluss "zurück" zu der jeweiligen Wärmequelle (z.B. Rotorabschnitt 3 oder Lager 4) zu reduzieren.

Obendrein können dadurch sogenannte "thermische Rückschlüsse" weitestgehend vermieden und gleichzeitig die Effizienz der Wärmeableitung verbessert werden. Die Wärme-Trennvorrichtung 6 kann beispielsweise eine Trennwand aus einem nicht wärmeleitfähigen Material oder zumindest einem Material, dessen Wärmeleitfähigkeit schlechter als die Wärmeleitfähigkeit der Luft ist. Beispielsweise kann dasselbe Material verwendet werden, aus dem die Schicht 22 ausgebildet ist.

Der vorgenannte Lüfter 5, z.B. ein Eigenlüfter, kann an jenem Wellenende 23 der Antriebswelle 2 fixiert sein, dass die Wärme abgebenden Wärmequellen - hier dem Rotorabschnitt 3 und das Lager 4 - in Axialrichtung X nachgeordnet ist. Das Wellenende 23 steht vorzugsweise mit einer Wärmesenke, wie z.B. Kühlmedium 6, Lüfter 5 oder Wärmetauscher (nicht gezeigt) in thermischem Kontakt. Dadurch kann die Konvektion in der dynamoelektrischen Maschine noch weiter verbessert werden. Die FIG 1 lässt erkennen, dass der Lüfter 7 sowohl an die zweiten Enden 210, 211 beider Wärmeleitungs-Pfade 20, 21 thermisch angekoppelt sein kann bzw. in wärmeleitfähigem Kontakt stehen kann. Darüber hinaus ist in FIG 1 erkennbar, dass die vorgenannte Wärme-Trennvorrichtung 7 ein Teil des Lüfters 5 sein kann. Es ist durchaus denkbar, dass mit den zweiten Enden unterschiedlicher Wärmeleitungs-Pfade unterschiedliche Lüfter in wärmeleitendem Kontakt stehen - dadurch können unterschiedliche Wärmeleitungs-Pfade unterschiedliche Wärmesenken haben.

Zusätzlich kann auch innerhalb der dynamoelektrischen Maschine 1 ein Hilfswärmeelement 8 (z.B. ein weiterer Lüfter) vorgesehen sein, das entweder Wärme an den Innenraum der dynamoelektrischen Maschine 1 abgibt, oder von dort Wärme aufnimmt und dem Lüfter 5 über einen der Wärmepfade - hier über den ersten Wärmeleitungs-Pfad 20 - zuführt. An dieser Stelle sei betont, dass an jeden Wärmeleitungs-Pfad auch mehrere unterschiedliche Wärmequellen von ähnlichem Temperaturniveau gekoppelt sein können. In dem oben beschriebenen Ausführungsbeispiel sind diese Wärmequelle: der Rotorabschnitt 3 und das Hilfswärmeelement 8.

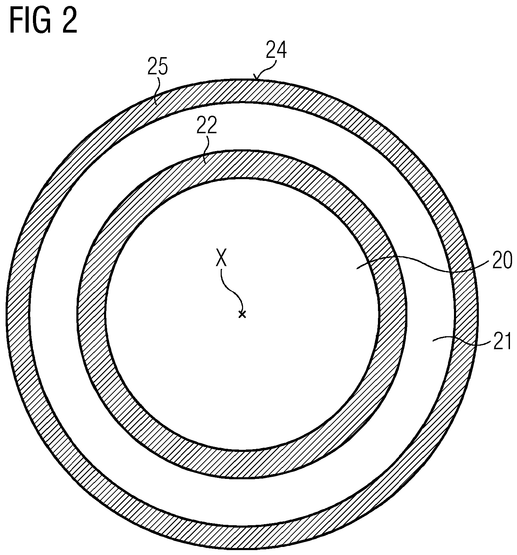

FIG 2 zeigt eine Schnittdarstellung der FIG 1. Eine Zusammenschau der FIG 1 und FIG 2 lässt erkennen, dass die Wärmeleitungs-Pfade 20, 21 koaxial angeordnet sein können. Dabei kann der zweite Wärmeleitungs-Pfad 21 in Radialrichtung kreisförmig und in Axialrichtung U-förmig sein. Der zweite Wärmeleitungs-Pfad 21 kann - mit Ausnahme seiner zwei Enden 201, 211 - von einer äußeren Mantelfläche 24 der Antriebswelle 2 durch eine weitere Schicht 25 aus einem Material thermisch getrennt sein, dessen Wärmeleitfähigkeit zumindest schlechter als die Wärmeleitfähigkeit der Luft ist. Hierdurch kann die Wärme-übertagung durch den zweiten Pfad 21 weiter verbessert werden. Der erste Wärmeleitungs-Pfad 20 kann teilweise nicht thermisch isoliert bleiben: der FIG 1 ist zu entnehmen, dass zwischen dem größeren Teil des ersten Wärmeleitungs-Pfads 20 und der äußeren Mantelfläche 24 der Antriebswelle 2 keine Wärmeisolierschicht vorgesehen ist. Eine solche Schicht ist aber natürlich denkbar und kann verwendet werden, um Konvektionseigenschaften des ersten Wärmeleitungs-Pfads 20 zu verbessern.

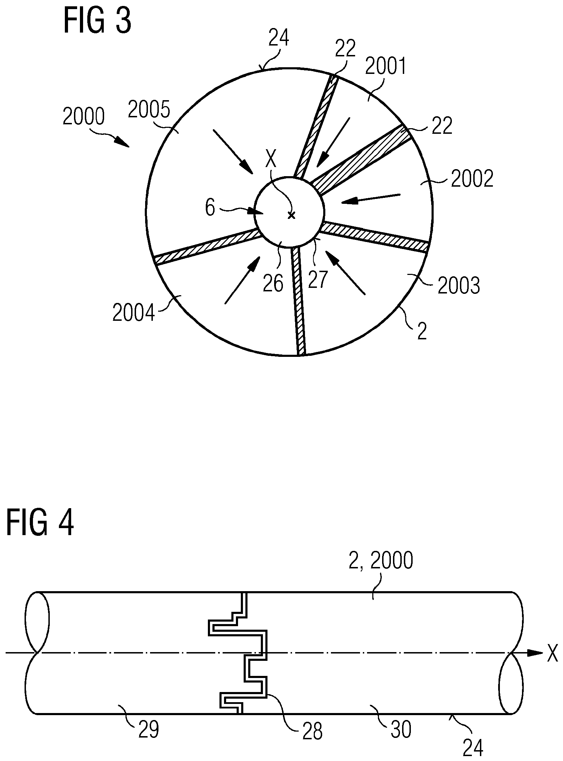

FIG 3 zeigt einen Schnitt einer Antriebswelle 2000 quer zu ihrer Axialrichtung X gemäß einer weiteren bevorzugten Ausführungsform. Die FIG 3 verdeutlicht, dass die vorgenannten Wärmeleitungs-Pfade 20, 21 eine andere geometrische Form aufweisen können. Die wärmeleitfähigen Pfade 2001, 2002, 2003, 2004, 2005 der Welle 2000 können auch - je nach Wärmequelle - in Umfangrichtung betrachtet segmentartig aufgebaut sein. Dies hängt von der jeweiligen thermischen Kopplung der jeweiligen Wärmequelle an die Antriebswelle 2000 ab.

Darüber hinaus lässt die FIG 3 erkennen, dass die Antriebswelle 2000 in ihrem Inneren eine Aufnahme 26 bzw. eine Aushöhlung aufweisen kann. Diese beispielsweise mit der Antriebswelle 2000 koaxial angeordnete Aufnahme 26 dient vorzugsweise als Wärmesenke(n). Insbesondere kann durch die Aufnahme ein Kühlmittel 6, z.B. Luft, fließen und eine Wärmeübertragung entlang des jeweiligen Wärmeleitungs-Pfads 2001 bis 2005 von der äußeren Mantelfläche 24 zu einer inneren Mantelfläche 27 der Antriebswelle 2 ermöglichen. Es versteht sich, dass auch bei dieser Ausführungsform entsprechende, bereits beschriebene technische Merkmale beispielsweise zur Vermeidung der "thermischen Kurzschlüsse" oder zur Verbesserung der Konvektionseigenschaften vorgesehen sein können, ohne dass es eine gesonderte Anpassung anderer Merkmale notwendig wäre.

Um auch von einer Arbeitsmaschine (nicht gezeigt) keinem Wärmefluss ausgesetzt zu sein, kann die Welle 2, 2000 zusätzlich mit einer thermischen und/oder elektrischen Blockade 28 ausgestattet sein (FIG 4). Diese Blockade 28 kann beispielsweise in Form einer mechanischen Kupplung ausgeführt sein und zum Verbinden eines ersten Teils 29 mit einem zweiten Teil 30 der Antriebswelle 2, 2000 eingerichtet sein. Die Blockade 28 kann labyrinthähnlich verlaufen.

Die oben beschriebene Antriebswelle 2, 2000 kann mit Hilfe eines Additive-Manufacturing-Verfahrens bzw. eines 3D-Druck-Verfahrens hergestellt werden. Dabei dient als Ausgangspunkt der Herstellung einer derartigen Welle 2, 2000 die Kenntnis der Verteilung der Wärmequellen 3, 4 und vorzugsweise der Wärmesenke(n) 5, 6 entlang der Antriebswelle 2, 2000. Jede Wärmequelle 3, 4 weist ihre Andockpunkte bzw. -stellen an der Antriebswelle 2, 2000 auf, die axial und/oder radial und/oder in Umfangsrichtung verteilt sind. Durch diese Andockstellen können beispielsweise die Positionen der (ersten) Enden 200, 201 der Wärmeleitungs-Pfade 20, 21 bestimmt/vorgegeben werden. Anhand dieser Kenntnis kann ein 3D-Modell der herzustellenden Antriebswelle 2, 2000 auf einem Computer konstruiert werden. Dieses Modell dient als Input für ein Additive-Manufacturing-Verfahren oder ein 3D-Druck-Verfahren, mit dem aus unterschiedlichen Schichten/Materialen die Antriebswelle 2, 2000 mit den mindestens zwei unterschiedlichen, voneinander thermisch getrennten Wärmeleitungs-Pfaden 20, 21, 2001, 2002, 2003, 2004, 2005 hergestellt wird.

Die vorgenannte Blockade 28 kann beispielsweise ebenfalls mittels des Additive-Manufacturing-Verfahrens ausgebildet sein.

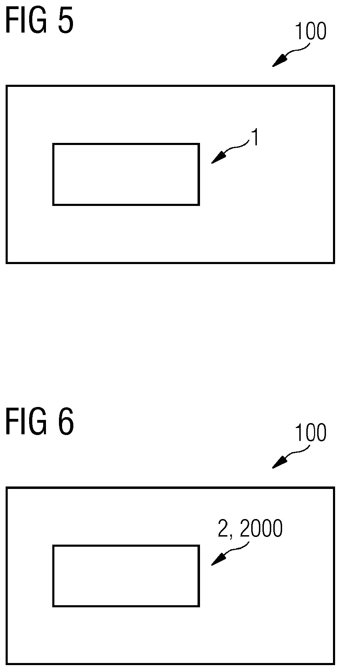

FIG 5 zeigt beispielhaft eine Antriebsmaschine bzw. -system 100 mit der vorgenannten dynamoelektrischen Maschine 1.

FIG 6 zeigt beispielhaft eine Antriebsmaschine bzw. -system 100 mit einer der vorgenannten Antriebswellen 2, 2000.

Ersichtlich ist, dass die Erfindung zwar in Bezug auf einige konkrete Beispiele beschrieben worden ist, ein Fachmann jedoch sicher in der Lage sein sollte, viele andere entsprechende Formen einer Antriebswelle, ihres Herstellungsverfahrens oder einer dynamoelektrischen Maschine zu erhalten, die die in den Ansprüchen dargelegten Eigenschaften aufweisen und damit alle in den dadurch festgelegten Schutzumfang fallen.

Die Bezugszeichen in den Ansprüchen dienen lediglich zum besseren Verständnis der vorliegenden Erfindung und bedeuten auf keinen Fall eine Beschränkung der vorliegenden Erfindung.

## Patentansprüche

1. Antriebswelle (2, 2000) einer dynamoelektrischen Maschine (1), wobei die Antriebswelle (2, 2000) mindestens zwei unterschiedliche, voneinander thermisch getrennte Wärmeleitungs-Pfade (20, 21, 2001, 2002, 2003, 2004, 2005) aufweist, wobei zumindest einer der Wärmeleitungs-Pfade (20, 21, 2001, 2002, 2003, 2004, 2005) eine monolithische Struktur bildet, wobei jeder Wärmeleitungs-Pfad (20, 21, 2001, 2002, 2003, 2004, 2005) zwei räumlich voneinander getrennte Enden (200, 201, 210, 211) aufweist und derart ausgebildet ist, dass Wärme in eines der beiden Enden (200, 210) in die Antriebswelle (2) einkoppeln und aus dem anderen Ende (201, 211) aus der Antriebswelle (2, 2000) auskoppeln kann,
wobei die Antriebswelle (2, 2000), die Wärmeleitungs-Pfade (20, 21, 2001, 2002, 2003, 2004, 2005) und ihre thermische Trennung schichtweise aufgebaut sind, wobei die Schichten mittels eines Additive-Manufacturing-Verfahrens gebildet sind.

2. Antriebswelle nach Anspruch 1, wobei ein erstes Ende (200, 201) eines jeden Wärmeleitungs-Pfads (20, 21, 2001, 2002, 2003, 2004, 2005) an eine Wärmequelle (3, 4) und ein zweites Ende (210, 211) dieses Wärmeleitungs-Pfads (20, 21) an eine Wärmesenke (5, 6) thermisch ankoppelbar ist, wobei die unterschiedlichen Wärmequellen (3, 4) an die unterschiedlichen Wärmeleitungs-Pfade (20, 21, 2001, 2002, 2003, 2004, 2005) thermisch ankoppelbar sind und die Wärmequellen (3, 4) eine höhere Temperatur als die Wärmesenke (5,6) aufweisen.

3. Antriebswelle nach Anspruch 1 oder 2, wobei die unterschiedlichen, voneinander thermisch getrennten Wärmeleitungs-Pfade (20 ,21, 2001, 2002, 2003, 2004, 2005) aus unterschiedlichem Material ausgebildet sind.

4. Antriebswelle nach einem der Ansprüche 1 bis 3, wobei jeder Wärmeleitungs-Pfad (20, 21, 2001, 2002, 2003, 2004, 2005) eine monolithische Struktur bildet.

5. Antriebswelle nach einem der Ansprüche 1 bis 4, wobei die unterschiedlichen Wärmeleitungs-Pfade (20, 21, 2001, 2002, 2003, 2004, 2005) elektrisch voneinander getrennt sind.

6. Antriebswelle nach einem der Ansprüche 1 bis 5, wobei die Wärmeleitungs-Pfade (20, 21) koaxial angeordnet sind.

7. Antriebswelle nach einem der Ansprüche 1 bis 5, wobei jeder Wärmeleitungs-Pfad (2001, 2002, 2003, 2004, 2005) im Querschnitt in etwa die Form eines Kreissegments aufweist.

8. Antriebswelle nach einem der Ansprüche 1 bis 7, wobei die Antriebswelle (2, 2000) eine Aufnahme (26) aufweist, die zum Aufnehmen mindestens einer Wärmesenke eingerichtet ist und vorzugsweise mit der Antriebswelle (2, 2000) koaxial angeordnet ist.

9. Antriebswelle nach einem der Ansprüche 1 bis 8, wobei die Antriebswelle (2, 2000) eine thermische Blockade (28) aufweist, die einen Wärmefluss in Axialrichtung (X) zwischen einem ersten Teil (29) der Antriebswelle (2, 2000) und einem zweiten Teil (30) der Antriebswelle (2, 2000) verhindert.

10. Dynamoelektrische Maschine mit mindestens einer Antriebswelle nach einem der Ansprüche 1 bis 9.

11. Maschine nach Anspruch 10 mit mindestens zwei Wärmequellen (3, 4) und mindestens einer Wärmesenke (5, 6), wobei die Wärmequellen (3, 4) unterschiedliche Temperaturen aufweisen, wobei die unterschiedlichen Wärmequellen an die unterschiedlichen, voneinander thermisch getrennten Wärmeleitungs-Pfade (20 ,21, 2001, 2002, 2003, 2004, 2005) derart thermisch gekoppelt sind, dass die Wärme von den unterschiedlichen Wärmequellen (3, 4) entlang der unterschiedlichen Wärmeleitungs-Pfade (20 ,21, 2001, 2002, 2003, 2004, 2005) isoliert zu der mindestens einen Wärmesenke (5, 6) fließen kann.

12. Maschine nach Anspruch 11, wobei mindestens eine der Wärmequellen als ein Rotorabschnitt (3) oder als ein Lager (4) ausgebildet ist und/oder die Wärmesenke als ein Lüfter (5) oder ein Wärmetauscher ausgebildet ist und/oder Kühlmedium (6) umfasst.

13. Maschine nach Anspruch 11 oder 12, wobei die Maschine (1) ferner eine Wärme-Trennvorrichtung (7) umfasst, wobei die Wärme-Trennvorrichtung (7) derart ausgebildet und an der Antriebswelle (2, 2000) derart angeordnet ist, dass die Wärme nach dem Auskoppeln aus den unterschiedlichen Wärmeleitungs-Pfaden (20, 21, 2001, 2002, 2003, 2004, 2005) weiter entlang voneinander thermisch isolierter Pfade von der Maschine (1) abfließen kann.

14. Maschine nach einem der Ansprüche 10 bis 13, wobei die Wärmeleitungs-Pfade (20, 21, 2001, 2002, 2003, 2004, 2005) durch wenigstens eine Schicht (22) voneinander thermisch getrennt sind, wobei jede Schicht (22) ein Material umfasst, vorzugsweise aus diesem Material besteht, dessen Wärmeleitfähigkeit schlechter als die Wärmeleitfähigkeit der Wärmeleitungs-Pfade (20, 21, 2001, 2002, 2003, 2004, 2005) ist.

15. Maschine nach einem der Ansprüche 10 bis 14, wobei ein an eine äußere Mantelfläche (24) der Antriebswelle (2) zumindest teilweise angrenzender Wärmeleitungs-Pfad (20, 21, 2001, 2002, 2003, 2004, 2005) von der äußeren Mantelfläche (24) der Antriebswelle (2) thermisch getrennt ist.

16. Maschine nach Anspruch 15, wobei zum thermischen Trennen des die äußere Mantelfläche (24) der Antriebswelle (2) zumindest teilweise angrenzenden Wärmeleitungs-Pfads (20, 21, 2001, 2002, 2003, 2004, 2005) von der äußeren Mantelfläche (24) mindestens eine thermoisolierende Schicht (25) vorgesehen ist.

17. Antriebsmaschine oder -system umfassend mindestens eine dynamoelektrische Maschine (1) nach einem der Ansprüche 10 bis 16.

## Claims

1. Drive shaft (2, 2000) of a dynamoelectric machine (1), wherein the drive shaft (2, 2000) has at least two different heat conduction paths (20, 21, 2001, 2002, 2003, 2004, 2005) that are thermally separate from one another, wherein at least one of the heat conduction paths (20, 21, 2001, 2002, 2003, 2004, 2005) forms a monolithic structure wherein each heat conduction path (20, 21, 2001, 2002, 2003, 2004, 2005) has two physically separate ends (200, 201, 210, 211) and is embodied such that heat can couple into the drive shaft (2) at one of the two ends (200, 210) and can couple out of the drive shaft (2, 2000) at the other end (201, 211), wherein the drive shaft (2, 2000), the heat conduction paths (20, 21, 2001, 2002, 2003, 2004, 2005) and thermal separation thereof are constructed in layers, wherein the layers are formed by means of an additive manufacturing method.

2. Drive shaft according to claim 1, wherein a first end (200, 201) of each heat conduction path (20, 21, 2001, 2002, 2003, 2004, 2005) can be thermally coupled to a heat source (3, 4) and a second end (210, 211) of this heat conduction path (20, 21) can be thermally coupled to a heat sink (5, 6), wherein the different heat sources (3, 4) can be thermally coupled to the different heat conduction paths (20, 21, 2001, 2002, 2003, 2004, 2005) and the heat sources (3, 4) have a higher temperature than the heat sink (5, 6).

3. Drive shaft according to claim 1 or 2, wherein the different heat conduction paths (20, 21, 2001, 2002, 2003, 2004, 2005) that are thermally separate from one another are made of different materials.

4. Drive shaft according to one of claims 1 to 3, wherein each heat conduction path (20, 21, 2001, 2002, 2003, 2004, 2005) forms a monolithic structure.

5. Drive shaft according to one of claims 1 to 4, wherein the different heat conduction paths (20, 21, 2001, 2002, 2003, 2004, 2005) are electrically separate from one another.

6. Drive shaft according to one of claims 1 to 5, wherein the heat conduction paths (20, 21) are arranged coaxially.

7. Drive shaft according to one of claims 1 to 5, wherein, in cross section, each heat conduction path (2001, 2002, 2003, 2004, 2005) has approximately the shape of a segment of a circle.

8. Drive shaft according to one of claims 1 to 7, wherein the drive shaft (2, 2000) has a receptacle (26) configured to receive at least one heat sink and is preferably arranged coaxially with the drive shaft (2, 2000).

9. Drive shaft according to one of claims 1 to 8, wherein the drive shaft (2, 2000) has a thermal block (28), which prevents heat flow in the axial direction (X) between a first part (29) of the drive shaft (2, 2000) and a second part (30) of the drive shaft (2, 2000).

10. Dynamoelectric machine with at least one drive shaft according to one of claims 1 to 9.

11. Machine according to claim 10 with at least two heat sources (3, 4) and at least one heat sink (5, 6), wherein the heat sources (3, 4) have different temperatures, wherein the different heat sources are thermally coupled to the different heat conduction paths (20, 21, 2001, 2002, 2003, 2004, 2005) that are thermally separate from one another in such a way that heat from the different heat sources (3, 4) is able to flow along the different heat conduction paths (20, 21, 2001, 2002, 2003, 2004, 2005) to the at least one heat sink (5, 6) in an insulated manner.

12. Machine according to claim 11, wherein at least one of the heat sources is embodied as a rotor section (3) or as a bearing (4) and/or the heat sink is embodied as a fan (5) or a heat exchanger and/or comprises a cooling medium (6).

13. Machine according to claim 11 or 12, wherein the machine (1) further comprises a heat-separating apparatus (7), wherein the heat-separating apparatus (7) is embodied and arranged on the drive shaft (2, 2000) in such a way that, after decoupling from the different heat conduction paths (20, 21, 2001, 2002, 2003, 2004, 2005), heat can continue to flow away from the machine (1) along paths that are thermally insulated from one another.

14. Machine according to one of claims 10 to 13, wherein the heat conduction paths (20, 21, 2001, 2002, 2003, 2004, 2005) are thermally separated from one another by at least one layer (22), wherein each layer (22) comprises a material, preferably consists of this material, with thermal conductivity that is worse than the thermal conductivity of the heat conduction paths (20, 21, 2001, 2002, 2003, 2004, 2005).

15. Machine according to one of claims 10 to 14, wherein a heat conduction path (20, 21, 2001, 2002, 2003, 2004, 2005) that at least partially adjoins an outer peripheral surface (24) of the drive shaft (2) is thermally separate from the outer peripheral surface (24) of the drive shaft (2).

16. Machine according to claim 15, wherein at least one thermally insulating layer (25) is provided in order to thermally separate the heat conduction path (20, 21, 2001, 2002, 2003, 2004, 2005), which at least partially adjoins the outer peripheral surface (24) of the drive shaft (2), from the outer peripheral surface (24).

17. Driving machine or system comprising at least one dynamoelectric machine (1) according to one of claims 10 to 16.

## Revendications

1. Arbre (2, 2000) d'entraînement d'une machine (1) dynamoélectrique, dans lequel l'arbre (2, 2000) d'entraînement a au moins deux chemins (20, 21, 2001, 2002, 2003, 2004, 2005) de conduction de la chaleur différents séparés thermiquement l'un de l'autre, dans lequel au moins l'un des chemins (20, 21, 2001, 2002, 2003, 2004, 2005) de conduction de la chaleur forment une structure monolithique, dans lequel chaque chemin (20, 21, 2001, 2002, 2003, 2004, 2005) de conduction de la chaleur a deux bouts (200, 201, 210, 211) séparés l'un de l'autre dans l'espace et constitués de manière à ce que de la chaleur dans l'un des deux bouts (200, 210) puisse entrer dans l'arbre (2) d'entraînement et puisse sortir par l'autre bout (201, 211) de l'arbre (2, 2000) d'entraînement,
dans lequel
l'arbre (2, 2000) d'entraînement, les chemins (20, 21, 2001, 2002, 2003, 2004, 2005) de conduction de la chaleur et leur séparation thermique sont constitués couche par couche, dans lequel les couches sont formées au moyen d'un procédé de fabrication additive.

2. Arbre d'entraînement suivant la revendication 1, dans lequel un premier bout (200, 201) d'un chemin (20, 21, 2001, 2002, 2003, 2004, 2005) de conduction de la chaleur peut être relié thermiquement à une source (3, 4) de chaleur et un second bout (210, 211) de ce chemin (20, 21) de conduction de la chaleur peut être relié thermiquement à un puits (5, 6) de chaleur, dans lequel les différentes sources (3, 4) de chaleur peuvent être reliées thermiquement aux différents chemins (20, 21, 2001, 2002, 2003, 2004, 2005) de conduction de la chaleur et les sources (3, 4) de chaleur ont une température plus haute que le puits (5, 6) de chaleur.

3. Arbre d'entraînement suivant la revendication 1 ou 2, dans lequel les différents chemins (20, 21, 2001, 2002, 2003, 2004, 2005) de conduction de la chaleur séparés thermiquement les uns des autres sont constitués de matériaux différents.

4. Arbre d'entraînement suivant l'une des revendications 1 à 3, dans lequel chaque chemin (20, 21, 2001, 2002, 2003, 2004, 2005) de conduction de la chaleur forment une structure monolithique.

5. Arbre d'entraînement suivant l'une des revendications 1 à 4, dans lequel les différents chemins (20, 21, 2001, 2002, 2003, 2004, 2005) de conduction de la chaleur sont séparés électriquement les uns des autres.

6. Arbre d'entraînement suivant l'une des revendications 1 à 5, dans lequel les chemins (20, 21) de conduction de la chaleur sont disposés coaxialement.

7. Arbre d'entraînement suivant l'une des revendications 1 à 5, dans lequel chaque chemin (2001, 2002, 2003, 2004, 2005) de conduction de la chaleur a, en section transversale, peu près la forme d'un segment de cercle.

8. Arbre d'entraînement suivant l'une des revendications 1 à 7, dans lequel l'arbre (2, 2000) d'entraînement a un logement (26), qui est conçu pour la réception d'au moins un puits de chaleur et qui, de préférence, est disposé coaxialement à l'arbre (2, 2000) d'entraînement.

9. Arbre d'entraînement suivant l'une des revendications 1 à 8, dans lequel l'arbre (2, 2000) d'entraînement a un blocage (28) thermique, qui empêche un flux de chaleur, dans la direction (X) axiale, entre une première partie (29) de l'arbre (2, 2000) d'entraînement et une deuxième partie (30) de l'arbre (2, 2000) d'entraînement.

10. Machine dynamoélectrique ayant au moins un arbre d'entraînement suivant l'une des revendications 1 à 9.

11. Machine suivant la revendication 10, comprenant au moins deux sources (3, 4) de chaleur et au moins un puits (5, 6) de chaleur, dans laquelle les sources (3, 4) de chaleur ont des températures différentes, dans laquelle les différentes sources de chaleur sont reliées thermiquement aux différents chemins (20, 21, 2001, 2002, 2003, 2004, 2005) de conduction de la chaleur séparés thermiquement les uns des autres, de manière à ce que la chaleur puisse se propager le long des différents chemins (20, 21, 2001, 2002, 2003, 2004, 2005) de conduction de la chaleur des différentes sources (3, 4) de chaleur, de manière isolée, à au moins un puits (5, 6) de chaleur.

12. Machine suivant la revendication 11, dans laquelle au moins l'une des sources de chaleur est constituée sous la forme d'une partie (3) d'un rotor, ou sous la forme d'un palier (4) et/ou le puits de chaleur est constitué sous la forme d'un ventilateur (5) ou d'un échangeur de chaleur et/ou comprend un fluide (6) réfrigérant.

13. Machine suivant la revendication 11 ou 12, dans laquelle la machine (1) comprend en outre un dispositif (7) de séparation de la chaleur, dans laquelle le dispositif (7) de séparation de la chaleur est constitué et est disposé sur l'arbre (2, 2000) d'entraînement, de manière à ce que la chaleur, après être sortie des différents chemins (20, 21, 2001, 2002, 2003, 2004, 2005) de conduction de la chaleur, puisse continuer à s'évacuer de la machine (1) le long de chemins isolés thermiquement les uns des autres.

14. Machine suivant l'une des revendications 10 à 13, dans laquelle les chemins (20, 21, 2001, 2002, 2003, 2004, 2005) de conduction de la chaleur sont séparés thermiquement les uns des autres par au moins une couche (22), dans laquelle chaque couche (22) comprend un matériau en étant, de préférence, constituée en ce matériau, dont la conductibilité thermique est plus mauvaise que le conductibilité thermique des chemins (20, 21, 2001, 2002, 2003, 2004, 2005) de conduction de la chaleur.

15. Machine suivant l'une des revendications 10 à 14, dans laquelle un chemin (20, 21, 2001, 2002, 2003, 2004, 2005) de conduction de la chaleur voisin au moins en partie d'une surface (24) latérale extérieure de l'arbre (2) d'entraînement est séparé thermiquement de la surface (24) latérale extérieure de l'arbre (2) d'entraînement.

16. Machine suivant la revendication 15, dans laquelle il est prévu au moins une couche (25) thermo-isolante pour séparer thermiquement la surface (24) latérale extérieure du chemin (20, 21, 2001, 2002, 2003, 2004, 2005) de conduction de la chaleur voisin au moins en partie de la surface (24) latérale extérieure de l'arbre (2) d'entraînement.

17. Machine d'entraînement ou système d'entraînement, comprenant au moins une machine (1) dynamoélectrique suivant l'une des revendications 10 à 16.
